# EUROPEAN PATENT APPLICATION

(11) **EP 3 425 715 A1**
(43) Date of publication of application: **09.01.2019**
(21) Application number: 17759641.8
(22) Date of filing: 14.02.2017
(51) Int. Cl.: H01M 8/18, H01M 4/86, H01M 8/02

(54) **ELECTRODE AND ELECTROLYTIC SOLUTION CIRCULATION TYPE BATTERY**

(30) Priority: 29.02.2016 JP 2016037087
(71) Applicant: Sumitomo Electric Industries, Ltd., Osaka-shi, Osaka 541-0041 (JP)
(72) Inventor: HANAFUSA Kei, Osaka-shi Osaka 554-0024 (JP); NAKAISHI Hiroyuki, Osaka-shi Osaka 554-0024 (JP); ITO Kenichi, Osaka-shi Osaka 554-0024 (JP); OKUMURA Souichirou, Osaka-shi Osaka 554-0024 (JP); EGUCHI Hirokazu, Osaka-shi Osaka 554-0024 (JP)
(74) Representative: Boult Wade Tennant LLP
(86) International application number: PCT/JP2017/005221
(87) International publication number: WO 2017/150170

(57) **Abstract**

An electrode is constituted by a sheet-shaped porous body and used in an electrolyte-circulating battery that performs charging and discharging by circulating an electrolyte. Assuming that a portion of a side surface of the electrode that is adjacent to an inlet for the electrolyte when the electrode is installed in the electrolyte-circulating battery is an inlet end surface and a portion of the side surface of the electrode that is adjacent to an outlet for the electrolyte when the electrode is installed in the electrolyte-circulating battery is an outlet end surface, the electrode includes a first flow channel that is connected to the inlet end surface and extends toward the outlet end surface and a second flow channel that is connected to the outlet end surface and extends toward the inlet end surface. The first flow channel and the second flow channel do not directly communicate with each other.

## Description

### Technical Field

The present invention relates to an electrolyte-circulating battery and an electrode.

The present application claims priority based on Japanese Patent Application No. 2016-037087 filed on February 29, 2016, the entire contents of which are incorporated herein.

### Background Art

An electrolyte-circulating battery, such as a redox flow battery (hereinafter referred to also as an RF battery), in which electrolytes are supplied to electrodes to cause battery reactions, is an example of a storage battery. The RF battery has the following characteristics: (1) the capacity can be easily increased to a megawatt (MW) level; (2) long life; (3) the state of charge (SOC) of the battery can be accurately monitored; and (4) the battery output and the battery capacity can be designed independently so that high design flexibility is ensured. The RF battery is expected to be suitable for use as a storage battery for stabilizing a power system.

A typical RF battery includes a battery cell as a main component. The battery cell includes a positive electrode to which a positive electrolyte is supplied, a negative electrode to which a negative electrolyte is supplied, and a membrane interposed between the electrodes. A so-called cell stack obtained by stacking a plurality of battery cells together is used for large capacity applications.

The positive electrode and the negative electrode are each composed of a plate-shaped carbon material (porous body), such as carbon felt, obtained by collecting carbon fibers together (PTL 1). PTL 1 discloses a redox flow battery electrode composed of a porous body having a plurality of straight parallel grooves in a surface thereof that faces a membrane. The grooves in the electrode composed of the porous body improve the electrolyte circulation performance, and the pressure loss of the electrolyte can be reduced as a result. In other words, energy loss due to a delivery pump can be reduced.

### Citation List

### Patent Literature

PTL 1: Japanese Unexamined Patent Application Publication No. 2002-246035 Summary of Invention

An electrode according to an aspect of the present invention is constituted by a sheet-shaped porous body and used in an electrolyte-circulating battery that performs charging and discharging by circulating an electrolyte. Assuming that a portion of a side surface of the electrode that is adjacent to an inlet for the electrolyte when the electrode is installed in the electrolyte-circulating battery is an inlet end surface and a portion of the side surface of the electrode that is adjacent to an outlet for the electrolyte when the electrode is installed in the electrolyte-circulating battery is an outlet end surface, the electrode includes a first flow channel that is connected to the inlet end surface and extends toward the outlet end surface and a second flow channel that is connected to the outlet end surface and extends toward the inlet end surface. The first flow channel and the second flow channel do not directly communicate with each other.

An electrolyte-circulating battery according to an aspect of the present invention includes a positive electrode, a negative electrode, and a membrane interposed between the positive electrode and the negative electrode. At least one of the positive electrode and the negative electrode is the above-described electrode.

### Brief Description of Drawings

Figure 1 is a schematic perspective view of an electrode according to a first embodiment.
Figure 2 is a sectional view of Fig. 1 taken along line II-II.
Figure 3 is a schematic plan view of an electrode according to a second embodiment in which a first flow channel and a second flow channel are respectively provided at one side and the other side of the electrode.
Figure 4 is a sectional view of Fig. 3 taken along line IV-IV.
Figure 5 is a schematic plan view of an electrode according to a third embodiment in which one of a first flow channel and a second flow channel is provided inside the electrode.
Figure 6 is a sectional view of Fig. 5 taken along line VI-VI.
Figure 7 is a schematic plan view of an electrode according to a fourth embodiment in which a first flow channel and a second flow channel are both provided inside the electrode.
Figure 8 is a sectional view of Fig. 7 taken along line VIII-VIII.
Figure 9 is a schematic plan view of an electrode according to a fifth embodiment in which third flow channels are provided in addition to a first flow channel and a second flow channel.
Figure 10 is a sectional view of Fig. 9 taken along line X-X.
Figure 11 is a schematic plan view of an electrode according to a sixth embodiment in which third flow channels are provided inside the electrode.
Figure 12 is a sectional view of Fig. 11 taken along line XII-XII.
Figure 13 illustrates the basic structure and the basic operation principle of an electrolyte-circulating battery system.
Figure 14 is a schematic diagram illustrating an example of a cell stack included in an electrolyte-circulating battery.

### Description of Embodiments

### [Problems to be Solved by the Disclosure]

In recent years, with increasing use of renewable energy, electrolyte-circulating batteries with higher performance have been in demand. Accordingly, electrolyte-circulating batteries in which the energy loss is reduced not only by improving the electrolyte circulation performance but also by reducing the cell resistance are desired. In addition, electrodes with which such an electrolyte-circulating battery can be formed are also desired.

As described above, the electrolyte circulation performance can be improved by forming grooves in an electrode. However, in the above-described structure, the electrolyte may simply flow from an inlet for the electrolyte to an outlet for the electrolyte in the electrode and may insufficiently spread over the entire region of the electrode. As a result, the amount of battery reaction of ions of an active material contained in the electrolyte may be reduced, and there is a possibility that the cell resistance of the electrolyte-circulating battery will be increased.

Accordingly, one object of the present invention is to provide an electrode having a high electrolyte circulation performance and low cell resistance and an electrolyte-circulating battery including the electrode.

### [Description of Embodiments of the Invention]

<1> An electrode according to the present embodiment is constituted by a sheet-shaped porous body and used in an electrolyte-circulating battery that performs charging and discharging by circulating an electrolyte. Assuming that a portion of a side surface of the electrode that is adjacent to an inlet for the electrolyte when the electrode is installed in the electrolyte-circulating battery is an inlet end surface and a portion of the side surface of the electrode that is adjacent to an outlet for the electrolyte when the electrode is installed in the electrolyte-circulating battery is an outlet end surface, the electrode includes a first flow channel that is connected to the inlet end surface and extends toward the outlet end surface and a second flow channel that is connected to the outlet end surface and extends toward the inlet end surface. The first flow channel and the second flow channel do not directly communicate with each other.
   By forming the first flow channel and the second flow channel in the electrode, the electrolyte circulation performance of the electrode can be increased, and the pressure loss of the electrolyte in the electrode can be reduced. As a result, the energy loss of the pump that circulates the electrolyte in the electrolyte-circulating battery can be reduced. Since the first flow channel and the second flow channel, which improve the electrolyte circulation performance, do not directly communicate with each other, the electrolyte does not directly flow from the inlet for the electrolyte to the outlet for the electrolyte in the electrode. In this case, the electrolyte that flows through the first flow channel passes through openings in a tangible portion of the porous electrode composed of filaments or the like, flows into the second flow channel, and is discharged from the outlet. Therefore, the amount of active material discharged from the electrode without contributing to the battery reaction is smaller than that in the case where the first flow channel and the second flow channel communicate with each other, and the battery reaction in the electrode is activated. Accordingly, the cell resistance of the electrolyte-circulating battery decreases. In this specification, the term "flow channel" includes a recessed flow passage formed in a surface of the electrode and a tunnel-shaped flow passage formed inside the electrode. In addition, the term "side surface" includes a side surface of the sheet-shaped electrode in plan view.
<2> In the electrode according to the embodiment, a center of a cross section of the first flow channel and a center of a cross section of the second flow channel may be displaced from each other in a thickness direction of the electrode by a distance greater than or equal to a predetermined distance.
   When the first flow channel and the second flow channel are displaced from each other in the thickness direction, the flow of the electrolyte through the electrode in the thickness direction can be accelerated. As a result, the battery reaction can be activated in directions including the thickness direction over the entire region of the electrode, and the cell resistance of the electrolyte-circulating battery can be reduced. The center of the cross section of each flow channel is the position of the centroid of a figure having the same shape as the cross section. The displacement between the first flow channel and the second flow channel (above-described predetermined distance) may be determined as appropriate in accordance with the thickness of the electrode, and may be, for example, 0.5 mm or more, preferably 1 mm.
<3> In the electrode according to the embodiment, the first flow channel may open at one side of the electrode and the second flow channel may open at the other side of the electrode.
   When the first flow channel and the second flow channel are at one and the other sides of the electrode and are separated from each other, the electrolyte easily spreads over the entire region of the electrode in the thickness direction. As a result, the battery reaction can be activated over the entire region of the electrode. Here, the terms "one side" and "the other side" of the electrode mean top and bottom sides of the sheet-shaped electrode in plan view, and one of the top and bottom sides is "one side" and the other is "the other side".
<4> In the electrode according to the embodiment, at least one of the first flow channel and the second flow channel may be provided inside the electrode in a thickness direction of the electrode.
   When at least one of the first flow channel and the second flow channel is provided inside the electrode, the battery reaction easily occurs inside the electrode. As a result, the battery reaction can be activated over the entire region of the electrode. The flow channels formed inside the electrode are tunnel-shaped flow passages.
<5> In the electrode according to the embodiment, the first flow channel and the second flow channel may both be comb-shaped.
   When the first flow channel and the second flow channel are comb-shaped, the electrolyte easily spreads in a planar direction of the electrode (direction along a plane perpendicular to the thickness direction of the electrode). As a result, the battery reaction can be activated over the entire region of the electrode. The comb-shaped first flow channel (second flow channel) is a flow channel including a trunk groove connected to the inlet end surface (outlet end surface) and a plurality of branch grooves that are connected to the trunk groove and that extend in a direction crossing the trunk groove.
<6> In the electrode including the first flow channel and the second flow channel that are comb-shaped, tooth portions of the first flow channel and tooth portions of the second flow channel may be arranged so as to interlock with each other.
   When the tooth portions (portions constituted by branch grooves) of the first flow channel and tooth portions (portions constituted by branch grooves) of the second flow channel are arranged so as to interlock with each other, the electrolyte smoothly flows from the first flow channel to the second flow channel. As a result, an amount of increase in the pressure loss of the electrolyte due to the first flow channel and the second flow channel not directly communicating with each other can be reduced.
<7> In the electrode according to the embodiment, the first flow channel may include a transverse groove that extends in a direction along the inlet end surface and that is connected to the inlet end surface, and the second flow channel may include a transverse groove that extends in a direction along the outlet end surface and that is connected to the outlet end surface.
   The direction along the inlet end surface (outlet end surface) is a direction along the ridge lines between the inlet end surface (outlet end surface) and flat portions of the electrode (top and bottom surfaces of the sheet-shaped electrode in plan view). When the first flow channel includes the transverse groove, the electrolyte supplied to the electrode can be quickly distributed in the planar direction of the electrode. In addition, when the second flow channel includes the transverse groove, the electrolyte can be quickly discharged from the electrode. When the first flow channel (second flow channel) is comb-shaped and includes the trunk groove and the branch grooves, the trunk groove serves as the above-described transverse groove.
<8> The electrode according to the embodiment may further include a third flow channel that is disposed between the first flow channel and the second flow channel in a planar direction of the electrode and that does not directly communicate with the first flow channel or the second flow channel.
   When the third flow channel is formed, the flow of the electrolyte in the planar direction of the electrode can be adjusted. As a result, the electrolyte uniformly spreads in the planar direction of the electrode, and the battery reaction can be activated over the entire region of the electrode.
<9> In the electrode including the third flow channel, the third flow channel may be provided inside the electrode in a thickness direction of the electrode.
   When the third flow channel is provided inside the electrode, not only the flow of the electrolyte in the planar direction of the electrode but also the flow of the electrolyte in the thickness direction of the electrode can be adjusted. As a result, the electrolyte uniformly spreads in the thickness direction of the electrode as well as in the planar direction of the electrode.
<10> In the electrode according to the embodiment, the electrolyte-circulating battery may be a redox flow battery.
   The redox flow battery has the above-described characteristics, and is expected to be suitable for use as a storage battery for stabilizing a power system. Accordingly, the electrode according to the embodiment is suitable for use in the redox flow battery.
<11> An electrolyte-circulating battery according to an embodiment includes a positive electrode, a negative electrode, and a membrane interposed between the positive electrode and the negative electrode. At least one of the positive electrode and the negative electrode is the electrode according to any one of <1> to <9> described above.
   By using the electrode according to any one of <1> to <9> described above, an electrolyte-circulating battery having a low cell resistance can be obtained. In addition, by using the electrode in which the first flow channel and the second flow channel are formed to improve the electrolyte circulation performance, the energy required to circulate the electrolyte can be reduced.
<12> In the electrolyte-circulating battery according to an embodiment, the electrolyte-circulating battery may be a redox flow battery.
   The redox flow battery has the above-described characteristics, and is expected to be suitable for use as a storage battery for stabilizing a power system. Accordingly, the electrolyte-circulating battery according to the embodiment is suitable for use as a redox flow battery.

### [Advantageous Effects of the Disclosure]

The above-described electrode may be used to form an electrolyte-circulating battery having a high electrolyte circulation performance and a low cell resistance.

The above-described electrolyte-circulating battery has a high electrolyte circulation performance and a low cell resistance.

### [Detailed Description of Embodiments of the Invention]

### <First Embodiment>

A redox flow battery (RF battery), which is an electrolyte-circulating battery, according to an embodiment and redox flow battery electrodes (RF battery electrodes) according to embodiments will be described in detail with reference to the drawings. In the drawings, the same components are denoted by the same reference numerals.

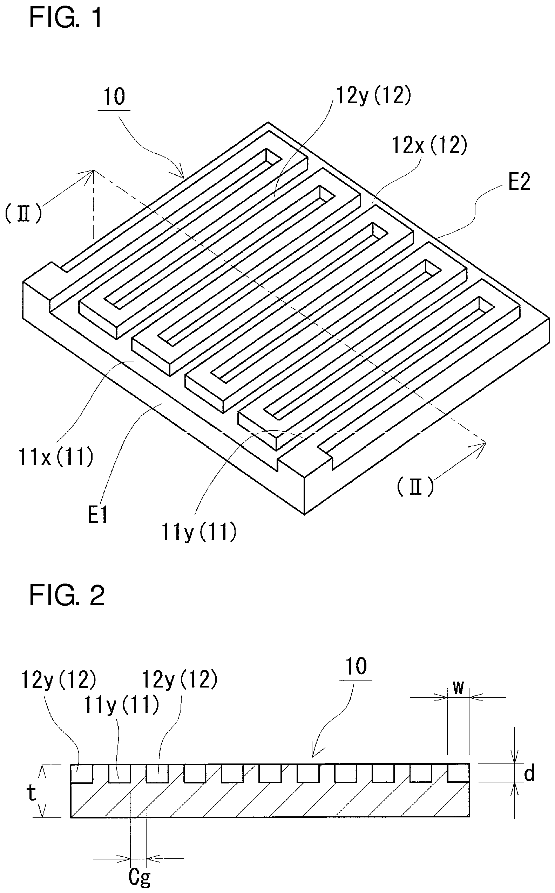

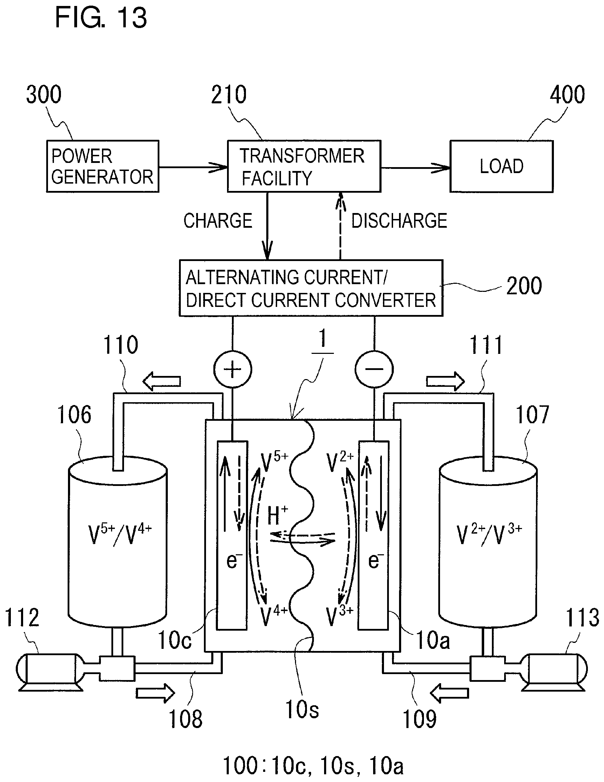

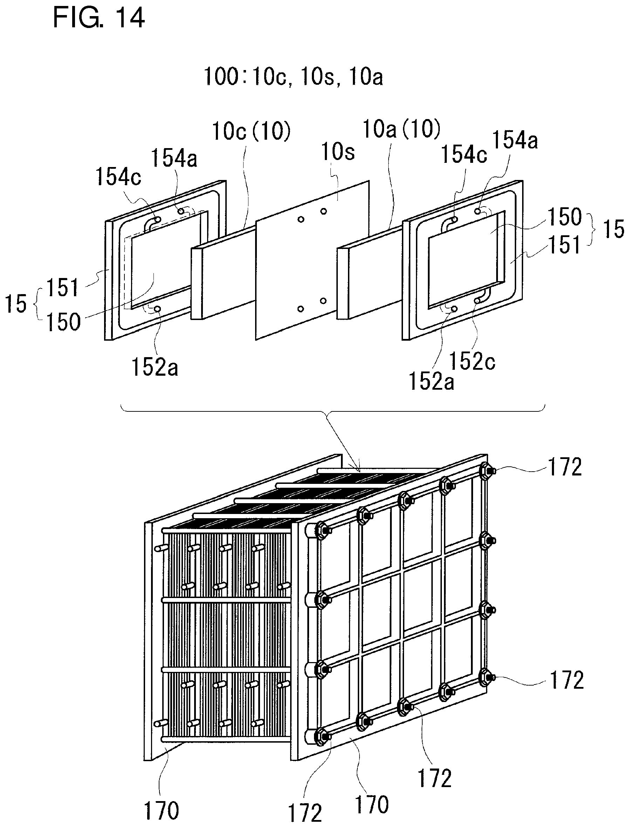

One of the characteristics of the RF battery according to the embodiment is the structure of the RF battery electrodes included therein. First, the basic structure of an RF battery system including an RF battery 1 according to the embodiment will be described with reference to Figs. 13 and 14. Then, an RF battery electrode will be described in detail with reference to Figs. 1 and 2.

### «RF Battery»

The RF battery 1 according to the embodiment is included in an RF battery system illustrated in Fig. 13 which has a circulation mechanism for circulating electrolytes through the RF battery 1. Typically, the RF battery 1 is connected to a power generator 300 and a load 400, such as a power system or a consumer, via an alternating current/direct current converter 200 and a transformer facility 210. The RF battery 1 performs charging (see solid line arrows) with the power generator 300 serving as an electricity supply source and discharging (see dotted line arrows) with the load 400 serving as a power supply target. The power generator 300 may be, for example, a photovoltaic generator, a wind power generator, or another common power plant.

The RF battery 1 includes a battery cell 100 as a main component thereof. The battery cell 100 includes a positive electrode 10c to which a positive electrolyte containing ions of a positive active material is supplied; a negative electrode 10a to which a negative electrolyte containing ions of a negative active material is supplied; and a membrane 10s interposed between the positive electrode 10c and the negative electrode 10a. The electrodes 10c and 10a included in the battery cell 100 serve as reaction fields for battery reactions of the ions of the active materials contained in the electrolytes, and are made of porous bodies to enable circulation of the electrolytes. The membrane 10s is a material that allows certain ions to pass therethrough. In the battery cell 100, the valences of the ions of the active materials are changed as shown by the solid line arrows during charging, and as shown by the broken line arrows during discharging. In this example, vanadium is used as the ions of positive and negative active materials.

As illustrated in Fig. 14, the RF battery 1 generally includes a plurality of the battery cells 100, and a bipolar plate 150 is disposed between adjacent battery cells 100, 100. The bipolar plate 150 is a conductive member that is sandwiched between the positive and negative electrodes 10c and 10a and that conducts a current but does not allow the electrolytes to pass therethrough. The bipolar plate 150 preferably has the shape of a flat plate without recesses or projections, and the thickness thereof is in the range from 0.3 mm to 5.0 mm, preferably from 0.4 mm to 2.0 mm. The bipolar plate 150 is typically included in a frame assembly 15 in which a frame body 151 is formed along the outer periphery of the bipolar plate 150. The frame body 151 has liquid supply holes 152c and 152a and liquid discharge holes 154c and 154a that open in the front and back surfaces of the frame body 151. The electrolytes are supplied to RF battery electrodes 10 disposed on the bipolar plate 150 through the liquid supply holes 152c and 152a, and are discharged through the liquid discharge holes 154c and 154a. The frame body 151 has an inlet slit that extends from the liquid supply hole 152c (152a) toward the bipolar plate 150 and an outlet slit that extends from the liquid discharge hole 154c (154a) toward the bipolar plate 150 at one side (the other side) thereof. The positive electrolyte (negative electrolyte) is supplied to the positive electrode 10c (negative electrode 10a) from the liquid supply hole 152c (152a) through the inlet slit, and discharged from the positive electrode 10c (negative electrode 10a) to the liquid discharge hole 154c (154a) through the outlet slit.

The battery cells 100 are stacked together and used in the form of a cell stack. As illustrated in Fig. 14, the cell stack is formed by successively stacking a bipolar plate 150 of one frame assembly 15, a positive electrode 10c, a membrane 10s, a negative electrode 10a, a bipolar plate 150 of another frame assembly 15, and so on. Current collector plates (not shown) are placed on the electrodes 10 instead of the bipolar plates 150 at both ends of the cell stack in the direction in which the battery cells 100 are stacked.

A pair of end plates 170, 170 are typically arranged at both ends of the cell stack in the direction in which the battery cells 100 are stacked, and are connected together by connecting members 172, such as long bolts.

As illustrated in Fig. 13, the RF battery system including the RF battery 1 further includes a positive electrolyte circulation path and a negative electrolyte circulation path described below, and circulates the positive electrolyte through each positive electrode 10c and the negative electrolyte through each negative electrode 10a. The circulation of the electrolytes enables the RF battery 1 to perform charging and discharging in response to reactions that involve changes in the valences of the ions of the active materials contained in the positive and negative electrolytes.

The positive electrolyte circulation path includes a positive electrolyte tank 106 that stores the positive electrolyte to be supplied to each positive electrode 10c, pipes 108 and 110 that connect the positive electrolyte tank 106 to the RF battery 1, and a pump 112 provided on the supply pipe 108.

The negative electrolyte circulation path includes a negative electrolyte tank 107 that stores the negative electrolyte to be supplied to each negative electrode 10a, pipes 109 and 111 that connect the negative electrolyte tank 107 to the RF battery 1, and a pump 113 provided on the supply pipe 109.

A plurality of the frame assemblies 15 are stacked together so that the liquid supply holes 152c and 152a and the liquid discharge holes 154c and 154a form electrolyte flow paths, and the pipes 108 to 111 are connected to these flow paths. The basic structure of the RF battery system may be an appropriate known structure.

### «RF Battery Electrode»

An RF battery electrode 10 according to the present embodiment illustrated in Figs. 1 and 2 includes a first flow channel 11 and a second flow channel 12 that do not directly communicate with each other. To concretely describe the first flow channel 11 and the second flow channel 12, a portion of the outer peripheral surface of the RF battery electrode in plan view, the portion being adjacent to an inlet for the electrolyte when the RF battery electrode is installed in the RF battery 1 (see Fig. 14), is defined as an inlet end surface E1, and a portion of the outer peripheral surface that is adjacent to an outlet for the electrolyte is defined as an outlet end surface E2. In this case, the first flow channel 11 is a flow channel for the electrolyte that is connected to the inlet end surface E1 and extends toward the outlet end surface E2. The second flow channel 12 is a flow channel that is connected to the outlet end surface E2 and extends toward the inlet end surface E1.

### [Tangible Portion]

The RF battery electrode 10 is a porous body having a three-dimensional mesh structure made of a conductive material, such as carbon. The RF battery electrode 10 may be, for example, carbon felt or carbon paper (in which fibers are not woven) or carbon cloth (in which fibers or threads made of entwined fibers are woven).

The RF battery electrode 10 may have either a single-layer structure or a multilayer structure. When the RF battery electrode 10 has a multilayer structure, the RF battery electrode 10 may be formed by, for example, combining a plate-shaped member having a predetermined rigidity obtained by, for example, burning carbon fibers and a soft sheet-shaped fiber collection material in which conductive fibers are entwined. In this case, the fiber collection material serves as a cushion.

### [Shape and Size]

The RF battery electrode 10 is typically a rectangular-plate-shaped material as illustrated in Fig. 1. The RF battery electrode 10 may instead have various other shapes, such as a circular shape, an elliptical shape, or a polygonal shape, in plan view. The size of the RF battery electrode 10 in plan view, for example, width and length when the RF battery electrode 10 is rectangular in plan view and diameter when the RF battery electrode 10 is circular in plan view, and the area of the RF battery electrode 10 in plan view may be appropriately selected depending on the output of the RF battery 1.

A thickness t of the RF battery electrode 10 (see Fig. 2) may be increased to increase the size of the battery reaction field, and reduced to reduce the thickness of the RF battery 1. The thickness t may be, for example, in the range from 0.5 mm to 5 mm. An RF battery electrode 10 having a small thickness t can be obtained when the RF battery electrode 10 is formed of a plate-shaped member and a fiber collection material.

### [First Flow Channel and Second Flow Channel]

The first flow channel 11 and the second flow channel 12 may have any shape as long as the following conditions are satisfied:
- The first flow channel 11 is connected to the inlet end surface E1 and extends toward the outlet end surface E2.
- The second flow channel 12 is connected to the outlet end surface E2 and extends toward the inlet end surface E1.
- The first flow channel 11 and the second flow channel 12 do not directly communicate with each other.

When the RF battery electrode 10 is rectangular-sheet-shaped as in this example, one of the four side surfaces serves as the inlet end surface E1, and the surface that opposes the inlet end surface E1 serves as the outlet end surface E2. When the RF battery electrode is circular-sheet-shaped, there is only one side surface. In this case, a portion of the side surface serves as the inlet end surface, and a portion that opposes the inlet end surface serves as the outlet end surface.

The first flow channel 11 (second flow channel 12) that satisfies the above-described conditions may be, for example, a straight flow channel that extends in a direction that connects the inlet end surface E1 and the outlet end surface E2 (direction in which the electrolyte flows). In the example illustrated in Fig. 1, the first flow channel 11 and the second flow channel 12 are comb-shaped channels formed at one side of the RF battery electrode 10. More specifically, the first flow channel 11, which is comb-shaped, includes a transverse groove (trunk groove) 11x that extends parallel to the inlet end surface E1 along the inlet end surface E1 and a plurality of longitudinal grooves (branch grooves) 11y that communicate with the transverse groove 11x and extend in a direction toward the outlet end surface E2 (direction in which the electrolyte flows). The longitudinal grooves 11y are arranged at predetermined intervals. The second flow channel 12, which is comb-shaped, includes a transverse groove (trunk groove) 12x that extends parallel to the outlet end surface E2 along the outlet end surface E2 and a plurality of longitudinal grooves (branch grooves) 12y that communicate with the transverse groove 12x and extend in a direction toward the inlet end surface E1 (direction opposite to the direction in which the electrolyte flows). Tooth portions constituted by the longitudinal grooves 11y of the first flow channel 11 and tooth portions constituted by the longitudinal grooves 12y of the second flow channel 12 are arranged so as to interlock with each other. The longitudinal grooves 11y and 12y may instead extend obliquely. The flow channels 11 and 12 may be formed by, for example, dicing.

The surface of the RF battery electrode 10 in which the first flow channel 11 and the second flow channel 12 are formed is preferably arranged to face the membrane 10s (see Fig. 14). When the surface in which the flow channels 11 and 12 are formed is arranged to face the membrane 10s, the electrolyte can be reliably supplied to the membrane 10s, and the contact resistance between the bipolar plate 150 and the electrode 10 can be reduced. Therefore, the cell resistance of the RF battery 1 can be reduced.

The first flow channel 11 and the second flow channel 12 illustrated in Fig. 1 have a rectangular cross section. The electrolyte circulation performance can be improved by increasing the cross sectional area of the flow channels 11 and 12. However, when the cross sectional area of the flow channels 11 and 12 is increased, the proportion of the tangible portion (portion other than the flow channels 11 and 12) of the RF battery electrode 10 is reduced, and the size of the battery reaction field may be reduced. To improve the electrolyte circulation performance without greatly reducing the size of the battery reaction field, the flow channels 11 and 12 may be formed to have a triangular, semicircular, or semielliptical cross section.

The electrolyte circulation performance can be changed by adjusting the depth (length in the thickness direction of the RF battery electrode 10) d and width w of the flow channels 11 and 12 (see Fig. 2). The transverse groove 11x (12x) and the longitudinal grooves 11y (12y) of the first flow channel 11 (second flow channel 12) may have the same depth d (width w) or different depths d (widths w). The longitudinal grooves 11y (12y) of the first flow channel 11 (second flow channel 12) may have different depths d and widths w, but preferably have the same depth d and width w. When the longitudinal grooves 11y (12y) have the same depth d and width w, the electrolyte easily uniformly flows through the RF battery electrode 10.

The depth d of the flow channels 11 and 12 may be, for example, in the range from 0.3 mm to 4 mm. The depth d is preferably in the range from 0.3 mm to 3 mm, and more preferably in the range from 0.5 mm to 2 mm, for example. When the flow channels 11 and 12 have a triangular or semicircular cross section, the depth of the deepest portions of the flow channels 11 and 12 is set in the above-described ranges.

The width w of the flow channels 11 and 12 may be, for example, in the range from 0.05 mm to 5 mm. The width w is preferably in the range from 0.1 mm to 4 mm, and more preferably in the range from 0.4 mm to 2 mm, for example.

The gaps between adjacent grooves, that is, gaps Cg between the longitudinal grooves of the first flow channel 11 and the longitudinal grooves of the second flow channel 12 in Fig. 2, are preferably in the range from 0.5 mm to 20 mm, and more preferably in the range from 1 mm to 10 mm, for example.

As described above, by forming the first flow channel 11 and the second flow channel 12 in the RF battery electrode 10, the electrolyte circulation performance of the RF battery electrode 10 can be improved, and the pressure loss of the electrolyte in the RF battery electrode 10 can be reduced. As a result, the load on the pumps 112 and 113 in the RF battery 1 illustrated in Fig. 13 can be reduced. In other words, the energy loss during operation of the RF battery 1 can be reduced.

Since the first flow channel 11 and the second flow channel 12, which improve the electrolyte circulation performance, are configured not to directly communicate with each other, the electrolyte that flows into the first flow channel 11 from the inlet end surface E1 flows into the second flow channel 12 after permeating into the tangible portion of the RF battery electrode 10. Therefore, the amount of active material that is discharged from the RF battery electrode 10 without contributing to the battery reaction is less than that in the case where the first flow channel 11 and the second flow channel 12 communicate with each other. As a result, the amount of battery reaction in the RF battery electrode 10 is increased, and the cell resistance of the RF battery 1 is reduced accordingly.

In addition, since the first flow channel 11 and the second flow channel 12 are comb-shaped, the electrolyte quickly spreads over the entire surface of the RF battery electrode 10 and activates the battery reaction of the RF battery electrode 10. In particular, since the longitudinal grooves 11y of the first flow channel 11 and the longitudinal grooves 12y of the second flow channel 12 are arranged so as to interlock with each other, the electrolyte smoothly flows from the first flow channel 11 to the second flow channel 12, and an amount of increase in the pressure loss of the electrolyte due to the first flow channel 11 and the second flow channel 12 not directly communicating with each other can be reduced.

### «Modification»

As a modification of the first embodiment, the first flow channel 11 and the second flow channel 12 may be formed not only at one side of the RF battery electrode 10 but also at the back side of the RF battery electrode 10.

### <Second Embodiment>

In the following embodiments including a second embodiment, RF battery electrodes including a first flow channel and a second flow channel formed in manners different from that in the first embodiment will be described. In plan views of the RF battery electrodes according to the respective embodiments, the flow channels are shown by hatched regions. In addition, in each embodiment, the depth d and width w of each flow channel and gaps Cg between the flow channels may be selected as in the first embodiment.

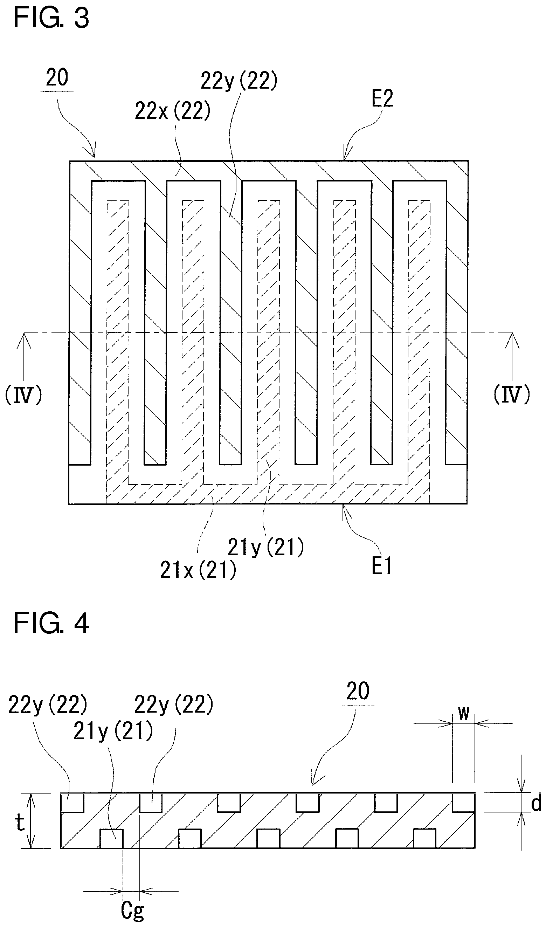

An RF battery electrode 20 according to the second embodiment illustrated in Figs. 3 and 4 includes a first flow channel 21 that is a comb-shaped channel formed at one side of the RF battery electrode 20 (back side of the page) and a second flow channel 22 that is a comb-shaped channel formed at the other side of the RF battery electrode 20 (front side of the page). The center of cross section (centroid) of the first flow channel 21 and the center of cross section (centroid) of the second flow channel 22 are displaced from each other in the thickness direction of the RF battery electrode 20 (this also applies to the third, fourth, and fifth embodiments described below). The first flow channel 21 includes a single transverse groove 21x and a plurality of longitudinal grooves 21y. The second flow channel 22 includes a single transverse groove 22x and a plurality of longitudinal grooves 22y. Also in this example, in plan view of the RF battery electrode 20, the longitudinal grooves 21y of the first flow channel 21 and the longitudinal grooves 22y of the second flow channel 22 are arranged so as to interlock with each other. When the RF battery electrode 20 is installed in the battery cell 100 (Fig. 14), the side at which the first flow channel 21 is formed is preferably arranged to face the membrane 10s so that unreacted electrolyte can be supplied to the membrane 10s.

Since the first flow channel 21 and the second flow channel 22 are at one and the other sides of the RF battery electrode 20 and are separated from each other, the electrolyte easily spreads over the entire region of the RF battery electrode 20 in the thickness direction. As a result, the battery reaction can be activated over the entire region of the RF battery electrode 20.

### <Third Embodiment>

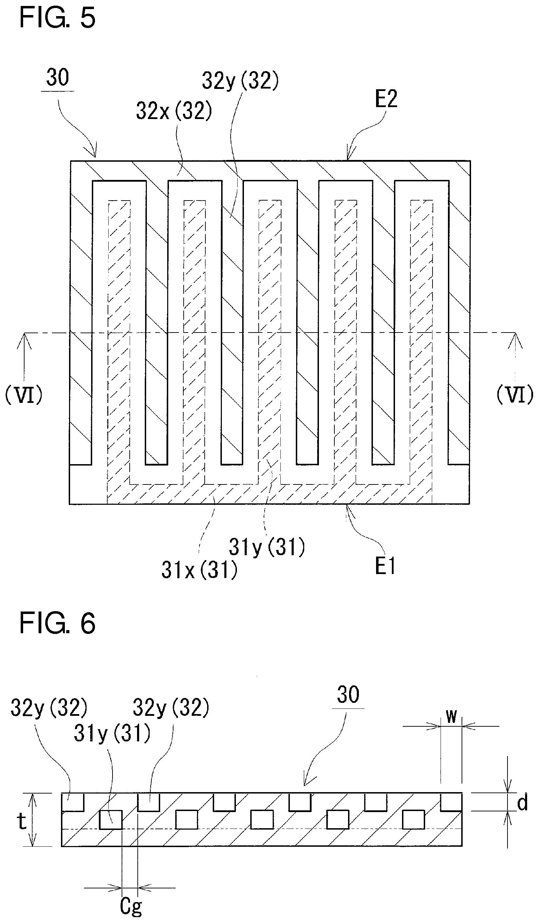

An RF battery electrode 30 illustrated in Figs. 5 and 6 includes a comb-shaped first flow channel 31 including a transverse groove 31x and a plurality of longitudinal grooves 31y and a comb-shaped second flow channel 32 including a transverse groove 32x and a plurality of longitudinal grooves 32y.

In the RF battery electrode 30 of this example, the first flow channel 31 is located inside the RF battery electrode 30 in the thickness direction and the second flow channel 32 is formed in a surface of the RF battery electrode 30 at the front side of the page (see, in particular, Fig. 6). Alternatively, the RF battery electrode 30 may be configured such that the first flow channel 31 is formed in a surface of the RF battery electrode 30, and the second flow channel 32 is formed inside the RF battery electrode 30.

The cross sectional shape of the first flow channel 31 formed inside the RF battery electrode 30 in the thickness direction may be rectangular as illustrated, or be circular, elliptical, or rhombic. Alternatively, the cross-sectional shape may be an irregular shape, such as a star shape.

The above-described RF battery electrode 30 may be manufactured by, for example, preparing two electrode materials that are separable from each other in the vertical direction along the two-dot chain line in Fig. 6, forming grooves in one of the electrode materials by, for example, dicing, and then bonding the two electrode materials together. An adhesive (for example, polyvinyl alcohol) or the like may be used to bond the electrode materials together.

Since the first flow channel 31 is located inside the RF battery electrode 30, the battery reaction easily occurs inside the RF battery electrode 30.

### <Fourth Embodiment>

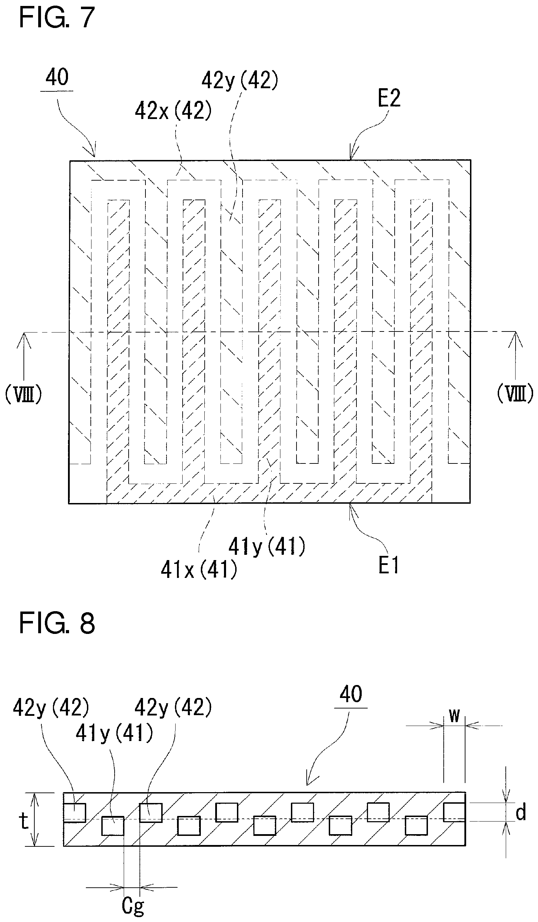

An RF battery electrode 40 illustrated in Figs. 7 and 8 includes a comb-shaped first flow channel 41 including a transverse groove 41x and a plurality of longitudinal grooves 41y and a comb-shaped second flow channel 42 including a transverse groove 42x and a plurality of longitudinal grooves 42y.

In the RF battery electrode 40 of this example, the first flow channel 41 and the second flow channel 42 are both located inside the RF battery electrode 40 in the thickness direction (see, in particular, Fig. 8). This RF battery electrode 40 may be manufactured by a method similar to that of the RF battery electrode 30 according to the third embodiment. For example, the RF battery electrode 40 may be manufactured by preparing two electrode materials that are separable from each other in the vertical direction along the two-dot chain line in Fig. 8, forming grooves in each of the electrode materials by, for example, dicing, and then bonding the two electrode materials together.

Since the first flow channel 41 and the second flow channel 42 are located inside the RF battery electrode 40, the battery reaction easily occurs inside the RF battery electrode 40.

### <Fifth Embodiment>

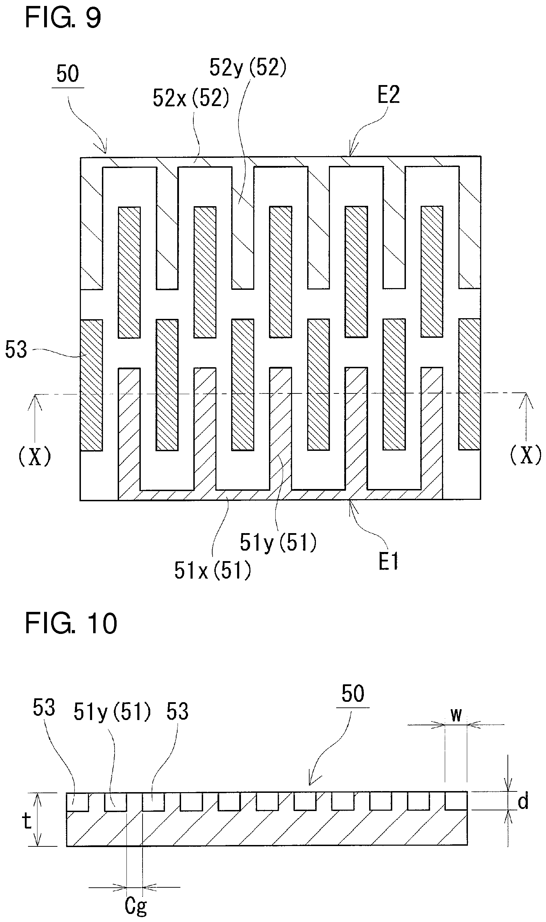

An RF battery electrode 50 illustrated in Figs. 9 and 10 includes a comb-shaped first flow channel 51 including a transverse groove 51x and a plurality of longitudinal grooves 51y and a comb-shaped second flow channel 52 including a transverse groove 52x and a plurality of longitudinal grooves 52y. The flow channels 51 and 52 are formed in a surface of the RF battery electrode 50 at the front side of the page. The RF battery electrode 50 of this example further includes a plurality of third flow channels 53 that do not communicate with the first flow channel 51 or the second flow channel 52 in the surface at the front side of the page.

The third flow channels 53 are formed by dividing the longitudinal grooves 11y and 12y of the RF battery electrode 10 illustrated in Fig. 1 at intermediate positions in the length direction thereof. More specifically, the third flow channels 53 are located at positions spaced from end portions of the longitudinal grooves 51y of the first flow channel 51 by a predetermined distance and at positions spaced from end portions of the longitudinal grooves 52y of the second flow channel 52 by a predetermined distance. The third flow channels 53 extend in a direction in which the electrolyte flows (vertical direction of the page).

The arrangement of the third flow channels 53 in a planar direction of the RF battery electrode 50 is not limited to that illustrated in Fig. 9. For example, each of the third flow channels 53 illustrated in Fig. 9 may be divided into a plurality of divided flow channels that are spaced from each other in the vertical direction of the page. In such a case, the divided flow channels serve as the third flow channels 53.

Since the third flow channels 53 are formed, the flow of the electrolyte in the planar direction of the RF battery electrode 50 can be adjusted. As a result, the electrolyte uniformly spreads in the planar direction of the RF battery electrode 50.

### <Sixth Embodiment>

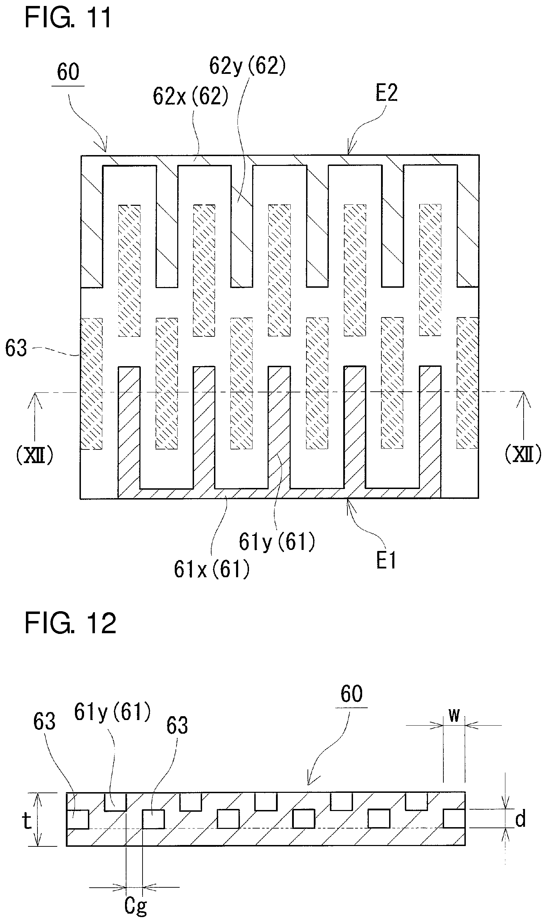

An RF battery electrode 60 illustrated in Figs. 11 and 12 includes a comb-shaped first flow channel 61 including a transverse groove 61x and a plurality of longitudinal grooves 61y and a comb-shaped second flow channel 62 including a transverse groove 62x and a plurality of longitudinal grooves 62y. The flow channels 61 and 62 are formed in a surface of the RF battery electrode 60 at the front side of the page. The RF battery electrode 60 of this example further includes a plurality of third flow channels 63 that do not communicate with the first flow channel 61 or the second flow channel 62. The third flow channels 63 are provided inside the RF battery electrode 60 in the thickness direction.

The RF battery electrode 60 may be manufactured by, for example, preparing two electrode materials that are separable from each other in the vertical direction along the two-dot chain line in Fig. 12, forming grooves in one of the electrode materials by, for example, dicing, and then bonding the two electrode materials together.

Since the third flow channels 63 are located inside the RF battery electrode 60, not only the flow of the electrolyte in the planar direction of the RF battery electrode 60 but also the flow of the electrolyte in the thickness direction of the RF battery electrode 60 can be adjusted.

### <Seventh Embodiment>

As modifications of the fifth and sixth embodiments, the positions of the first flow channel, the second flow channel, and the third flow channels in the thickness direction of the RF battery electrode may be changed. For example, the first flow channel and the second flow channel may respectively be formed at one and the other sides of the RF battery electrode, and the third flow channels may be formed inside the RF battery electrode. Alternatively, the first flow channel and the second flow channel may be formed at one side of the RF battery electrode, and the third flow channels may be formed at the other side of the RF battery electrode.

The third flow channels may be located at different positions in the thickness direction of the RF battery electrode. For example, some third flow channels may be located at one side of the RF battery electrode, other third flow channels may be located at the other side of the RF battery electrode, and still other third flow channels may be located inside the RF battery electrode.

### <Experiment Example 1>

In this experiment example, a plurality of RF batteries A to H and Z including electrodes having flow channels formed in different manners were manufactured. The state of circulation of the electrolyte and the cell resistance were measured for each RF battery.

### «RF battery A»

The RF battery electrode 10 described above with reference to Figs. 1 and 2 was manufactured, and a single-cell RF battery A including a positive electrode and a negative electrode which were each made of the RF battery electrode 10 was manufactured. The RF battery electrodes were made of carbon felt (this also applies to RF batteries B to H and Z).

### «RF battery B»

The RF battery electrode 20 described above with reference to Figs. 3 and 4 was manufactured, and a single-cell RF battery B including a positive electrode and a negative electrode which were each made of the RF battery electrode 20 was manufactured. The shapes of the first flow channel 21 and the second flow channel 22 in plan view, the gaps between the flow channels 21 and 22, and the cross-sectional shapes and cross sectional areas of the flow channels 21 and 22 were the same as those in the RF battery A.

### «RF battery C»

The RF battery electrode 30 described above with reference to Figs. 5 and 6 was manufactured, and a single-cell RF battery C including a positive electrode and a negative electrode which were each made of the RF battery electrode 30 was manufactured. The shapes of the first flow channel 31 and the second flow channel 32 in plan view, the gaps between the flow channels 31 and 32, and the cross-sectional shapes of the flow channels 31 and 32 were the same as those in the RF battery A.

### «RF battery D»

The RF battery electrode 40 described above with reference to Figs. 7 and 8 was manufactured, and a single-cell RF battery D including a positive electrode and a negative electrode which were each made of the RF battery electrode 40 was manufactured. The shapes of the first flow channel 41 and the second flow channel 42 in plan view, the gaps between the flow channels 41 and 42, and the cross-sectional shapes of the flow channels 41 and 42 were the same as those in the RF battery C. The distance between the center of the first flow channel 41 and the center of the second flow channel 42 in the thickness direction of the RF battery electrode 40 was shorter than that in the RF battery C.

### «RF battery E»

The RF battery electrode 50 described above with reference to Figs. 9 and 10 was manufactured, and a single-cell RF battery E including a positive electrode and a negative electrode which were each made of the RF battery electrode 50 was manufactured. The cross-sectional shapes of the first flow channel 51, the second flow channel 52, and the third flow channels 53 of the RF battery electrodes 50 were the same as those in the RF battery A.

### «RF battery F»

The RF battery electrode 60 described above with reference to Figs. 11 and 12 was manufactured, and a single-cell RF battery F including a positive electrode and a negative electrode which were each made of the RF battery electrode 60 was manufactured. The structure of the RF battery F was the same as that of the battery E except that the third flow channels 63 were located inside the RF battery electrode 60.

### «RF battery G»

A single-cell RF battery G including RF battery electrodes 10 that were the same as the RF battery electrodes 10 of the RF battery A except that the longitudinal grooves 11y and the longitudinal grooves 12y were V-shaped in cross section was manufactured. The width of the V-shaped grooves and the depth of the deepest portions of the V-shaped grooves were the same as the width and depth of the rectangular grooves in the RF battery A.

### «RF battery H»

A single-cell RF battery H including electrodes that were the same as the RF battery electrodes 10 of the RF battery A except that the longitudinal grooves 11y and the longitudinal grooves 12y were semicircular in cross section was manufactured. The width of the semicircular grooves and the depth of the deepest portions of the semicircular grooves were the same as the width and depth of the rectangular grooves in the RF battery A.

### «RF battery Z»

A single-cell RF battery Z including RF battery electrodes having a plurality of straight grooves that extended from an inlet end surface to an outlet end surface was manufactured. The total number of grooves was the same as the total number of longitudinal grooves 11y and 12y in the RF battery A. The cross-sectional shape of the grooves was the same as that of the longitudinal grooves 11y and 12y in the RF battery A.

### «Circulation Performance and Cell Resistance»

An electrolyte was caused to flow through the above-described batteries A to H and Z, and the electrolyte circulation performance and cell resistivity were measured for each of the batteries A to H and Z. The electrolyte caused to flow was a vanadium-based electrolyte. The electrolyte circulation performance was evaluated based on the level of output of each pump required to achieve a predetermined flow rate. The cell resistivity was measured under the following conditions: end-of-discharge voltage 1 V, end-of-charge voltage 1.6 V, and current 600 mA. With regard to the cell resistivity, a charge-discharge curve was created based on a charge-discharge test, and a cell resistivity in the third cycle of the charge-discharge curve was examined.

There were no significant differences between the batteries A to H and Z with regard to the electrolyte circulation performance. The batteries A to H and Z showed significant differences in cell resistivity. Table 1 given below shows the type of arrangement of the flow channels (see Figs. 1 to 12) and the cell resistivity of each of the batteries A to H and Z. The cell resistivity shown in the table is a relative value obtained assuming that the cell resistivity of the battery A is 1.0.

**[Table 1]**

| Battery No. | Type of Flow Channels | Cell Resistivity (Relative Value) |
|---|---|---|
| A | Figs. 1 and 2 | 1.0 |
| B | Figs. 3 and 4 | 0.8 |
| c | Figs. 5 and 6 | 0.9 |
| D | Figs. 7 and 8 | 1.0 |
| E | Figs. 9 and 10 | 0.95 |
| F | Figs. 11 and 12 | 0.8 |
| G | Figs. 1 and 2 | 0.95 |
| H | Figs. 1 and 2 | 0.95 |
| Z | No Figure | 1.4 |

### «Summary»

Referring to Table 1, when it is assumed that the cell resistivity of the battery A is 1.0, the cell resistivity of the battery B is 0.8, the cell resistivity of the battery C is 0.9, the cell resistivity of the battery D is 1.0, the cell resistivity of the battery E is 0.95, the cell resistivity of the battery F is 0.8, the cell resistivity of the battery G is 0.95, the cell resistivity of the battery H is 0.95, and the cell resistivity of the battery Z is 1.4. These results can be summarized as follows.

The cell resistivities of the batteries A to H, in which the first flow channel and the second flow channel do not directly communicate with each other, are lower than the cell resistivity of the battery Z, in which the grooves continuously extend from the inlet end surface to the outlet end surface. This result is presumably due to the fact that, in the batteries A to H, the first flow channel and the second flow channel do not directly communicate with each other and therefore the electrolyte does not directly flow from the inlet end surface to the outlet end surface.

A comparison between the batteries A to D shows that the battery B, which includes the RF battery electrodes having the first flow channel and the second flow channel formed in one and the other surfaces thereof (see Figs. 3 and 4), has the lowest cell resistivity. The battery C including the RF battery electrodes 30 illustrated in Figs. 5 and 6 has the second lowest cell resistivity after the battery B. The battery D including the RF battery electrodes 40 illustrated in Figs. 7 and 8 and the battery A including the RF battery electrodes 10 illustrated in Figs. 1 and 2 have substantially the same cell resistivity. Thus, the cell resistivity of the battery decreases as the distance between the first flow channel and the second flow channel in each RF battery electrode in the thickness direction of the RF battery electrode increases. This result is presumably due to the fact that the flow of the electrolyte through each RF battery electrode in the thickness direction can be accelerated by separating the first flow channel and the second flow channel from each other in the thickness direction of the RF battery electrode.

A comparison between the batteries A and E shows that the cell resistivity of the battery E including the RF battery electrodes 50 having the third flow channels 53 illustrated in Figs. 9 and 10 is lower than that of the battery A including the RF battery electrodes illustrated in Figs. 1 and 2, in which no third flow channels are provided. This result is presumably due to the fact that distribution of the electrolyte in the planar direction of the RF battery electrodes can be accelerated by forming the third flow channels. A comparison between the batteries E and F shows that the cell resistivity of the battery F including the RF battery electrodes 60 having the third flow channels 63 formed thereinside as illustrated in Figs. 11 and 12 is lower than the cell resistivity of the battery E including the RF battery electrodes 50 having the third flow channels 53 formed in a surface thereof as illustrated in Figs. 9 and 10.

A comparison between the batteries A, G, and H shows that the cell resistivity of the battery is lower when the first flow channel and the second flow channel are triangular or semicircular in cross section than when they are rectangular in cross section. This result is presumably due to the fact that the proportion of the tangible portion (portion other than the flow channels) of each RF battery electrode is greater when the flow channels are triangular or semicircular in cross section than when the flow channels are rectangular in cross section.

The present invention is not limited to the above-described examples, but is defined by the scope of the claims. The present invention is intended to include equivalents to the scope of the claims and all modifications within the scope. For example, the electrolyte used in the RF battery may instead be an iron-chromium based electrolyte containing iron (Fe) ions as the positive active material and chromium (Cr) ions as the negative active material, or a manganese-titanium based electrolyte containing manganese (Mn) ions as the positive active material and titanium (Ti) ions as the negative active material. Reference Signs List

10, 20, 30, 40, 50, 60 redox flow battery (RF battery) electrode
E1 inlet end surface E2 outlet end surface
11, 21, 31, 41, 51, 61 first flow channel
11x, 21x, 31x, 41x, 51x, 61x transverse groove
11y, 21y, 31y, 41y, 51y, 61y longitudinal groove (tooth portion)
12, 22, 32, 42, 52, 62 second flow channel
12x, 22x, 32x, 42x, 52x, 62x transverse groove
12y, 22y, 32y, 42y, 52y, 62y longitudinal groove (tooth portion)
53, 63 third flow channel
1 redox flow battery (RF battery)
100 battery cell
10c positive electrode 10a negative electrode 10s membrane
15 frame assembly 150 bipolar plate 151 frame body
152c, 152a liquid supply hole 154c, 154a liquid discharge hole
170 end plate 172 connecting member
106 positive electrolyte tank 107 negative electrolyte tank 108 to 111 pipe 112, 113 pump
200 alternating current/direct current converter 210 transformer facility 300 power generator 400 load

## Claims

1. An electrode constituted by a sheet-shaped porous body and used in an electrolyte-circulating battery that performs charging and discharging by circulating an electrolyte, wherein, assuming that a portion of a side surface of the electrode that is adjacent to an inlet for the electrolyte when the electrode is installed in the electrolyte-circulating battery is an inlet end surface and a portion of the side surface of the electrode that is adjacent to an outlet for the electrolyte when the electrode is installed in the electrolyte-circulating battery is an outlet end surface, the electrode comprises:
a first flow channel that is connected to the inlet end surface and extends toward the outlet end surface and a second flow channel that is connected to the outlet end surface and extends toward the inlet end surface, and
wherein the first flow channel and the second flow channel do not directly communicate with each other.

2. The electrode according to Claim 1, wherein a center of a cross section of the first flow channel and a center of a cross section of the second flow channel are displaced from each other in a thickness direction of the electrode by a distance greater than or equal to a predetermined distance.

3. The electrode according to Claim 2, wherein the first flow channel opens at one side of the electrode and the second flow channel opens at the other side of the electrode.

4. The electrode according to Claim 1 or 2, wherein at least one of the first flow channel and the second flow channel is provided inside the electrode in a thickness direction of the electrode.

5. The electrode according to any one of Claims 1 to 4, wherein the first flow channel and the second flow channel are both comb-shaped.

6. The electrode according to Claim 5, wherein tooth portions of the first flow channel and tooth portions of the second flow channel are arranged so as to interlock with each other.

7. The electrode according to any one of Claims 1 to 6, wherein the first flow channel includes a transverse groove that extends in a direction along the inlet end surface and that is connected to the inlet end surface, and
wherein the second flow channel includes a transverse groove that extends in a direction along the outlet end surface and that is connected to the outlet end surface.

8. The electrode according to any one of Claims 1 to 7, further comprising a third flow channel that is disposed between the first flow channel and the second flow channel in a planar direction of the electrode and that does not directly communicate with the first flow channel or the second flow channel.

9. The electrode according to Claim 8, wherein the third flow channel is provided inside the electrode in a thickness direction of the electrode.

10. The electrode according to any one of Claims 1 to 9, wherein the electrolyte-circulating battery is a redox flow battery.

11. An electrolyte-circulating battery comprising a positive electrode, a negative electrode, and a membrane interposed between the positive electrode and the negative electrode,
wherein at least one of the positive electrode and the negative electrode is the electrode according to any one of Claims 1 to 9.

12. The electrolyte-circulating battery according to Claim 11, wherein the electrolyte-circulating battery is a redox flow battery.
